# NEUE EUROPÄISCHE PATENTSCHRIFT

(11) **EP 1 299 662 B2**
(45) Veröffentlichungstag und Bekanntmachung des Hinweises auf die Entscheidung über den Einspruch: **06.05.2009**
(45) Hinweis auf die Patenterteilung: 05.10.2005
(21) Anmeldenummer: 01969334.0
(22) Anmeldetag: 03.07.2001
(51) Int. Cl.: F16J 15/32

(54) **WELLENDICHTRING**
SHAFT SEALING RING
BAGUE D'ETANCHEITE

(30) Priorität: 10.07.2000 DE 10033446
(43) Veröffentlichungstag der Anmeldung: 09.04.2003
(73) Patentinhaber: Dichtungstechnik G. Bruss GmbH & Co. KG, D-22955 Hoisdorf (DE)
(72) Erfinder: JOHNEN, Rolf, 24649 Wiemersdorf (DE)
(74) Vertreter: Verweyen, Andreas
(86) Internationale Anmeldenummer: PCT/EP2001/007606
(87) Internationale Veröffentlichungsnummer: WO 2002/004846

(56) Entgegenhaltungen:
- EP-A- 0 999 388
- EP-A1- 0 915 124
- EP-A2- 0 742 268
- EP-A2- 0 980 998
- EP-A2- 1 026 428
- WO-A1-00/64985
- WO-A1-99/67330
- DE-A- 19 539 057
- DE-A1- 3 506 925
- DE-A1- 19 740 822
- FR-A1- 2 252 515
- FR-A2- 2 381 950
- US-A- 3 214 179
- US-A- 3 913 925
- US-A- 5 143 385
- US-A- 5 615 894
- US-A- 5 791 658

## Beschreibung

Die Erfindung betrifft einen Wellendichtring mit einer Dichtlippe aus einem Elastomerwerkstoff gemäß dem Oberbegriff des Anspruchs 1 (US-A-3 913 925).

In den letzten Jahren wurden Wellendichtringe aus elastomeren Werkstoffen bei anspruchsvollen Anwendungen, wie in modernen Verbrennungsmotoren, zunehmend durch Wellendichtringe mit Dichtlippen aus Polyetrafluoräthylen (PTFE) ersetzt. Bei solchen Wellendichtringen ist vorgeschlagen worden, einen in montiertem Zustand des Wellendichtringes auf einem Oberflächenbereich der Welle anliegenden Dichtabschnitt mit einem Gewinde zu versehen, welches abzudichtendes Medium (Schmiermittel) bei drehender Welle zum abzudichtenden Raum hin zurückfördert (vgl. H.K. Müller "Abdichtung bewegter Maschinenteile", 1990, Medienverlag Ursula Müller, Seite 42, 43, Bild 18-RD).

Bei solchen Wellendichtringen mit Dichtlippe aus PTFE ist problematisch, daß sie nur "dynamisch", d.h. bei rotierender Welle, abdichten, jedoch "statisch", d.h. bei stillstehender Welle, undicht sind. Ferner ist die Fertigung durch die sehr geringen zulässigen Toleranzen hinsichtlich der Konzentrizität des Dichtringes der Welle und der zulässigen Spaltweite zwischen Welle und Gehäuse erschwert.

Bei Radial-Weilendichtringen mit im wesentlichen radial verlaufender Dichtlippe aus einem elastomeren Werkstoff sind sogenannte hydrodynamische Dichthilfen bekannt, die nach Art eines "Scheibenwischers" arbeiten (vgl. Seite 39, 40 und Bild 14-RD im oben zitierten Buch von H.K. Müller). Derartige Wellendichtringe sind in der Regel mit einer sogenannten Wurmfeder zur Anpressung der Dichtlippe an den Wellenumfang versehen. Die von der Wurmfeder erzeugte radiale Anpressung, welche die auf den Wellen umfang bezogene Anpreßkraft der Dichtlippe an die Wellenoberfläche darstellt, liegt gewöhnlich in einem Bereich zwischen 0,8 und 1,6 N/cm.

Fehlerhafte oder vergessene Montage der Feder oder Abspringen der Feder aufgrund nachlässiger Montage führte häufig zu Frühausfällen. Die Gestaltung der elastomeren Dichtlippe mit einer Spitze, welche mit nahezu Linienberührung an der Welle anliegt, sowie die durch die Feder bedingten hohen Anpreßdrücke können zu Übertemperaturen und damit Beschädigungen in der Kontaktzone der Dichtlippe führen. Solche Beschädigungen verkürzen häufig die Lebensdauer.

Der Erfindung liegt die Aufgabe zugrunde, einen Wellendichtring mit elastomerer Dichtlippe zu schaffen, der hohe Umfangsgeschwindigkeiten und Schwingungsbelastungen der Welle aushält, erhöhte Lebensdauer gegenüber den bekannten Wellendichtringen mit elastomerer Dichtlippe aufweist, statische Dichtheit gewährleistet und Frühausfälle vermeidet, wobei außerdem einfache und damit billige Herstellung gewährleistet sein soll.

Diese Aufgabe wird durch Patentanspruch 1 gelöst.

Bei der Erfindung wird durch die biegeweiche oder "biegeschlaffe" Ausgestaltung der aus einem Elastomerwerkstoff bestehenden Dichtlippe ermöglicht, daß sich die Dichtlippe wie bei den bekannten PT-FE-Dichtlippen in montiertem Zustand mit einem Dichtabschnitt über eine vorbestimmte Länge tangential an einen Oberflächenbereich der Welle anschmiegt, wobei die Biegeelastizität durch sorgfältige Dimensionierung der Dichtlippe gerade so bemessen werden kann, daß sie eine dynamische Abdichtung gewährleistet, weil der Dichtabschnitt aufgrund seiner Biegeweichheit oder -schlaffheit Schwingungsbewegungen der Welle folgt. Dadurch, daß der Dichtabschnitt über einen Flächenbereich einer vorbestimmten axialen Länge an der Oberfläche der Welle anliegt, ist die Anpressung gegenüber einer Lösung vermindert, bei der die Dichtlippe lediglich über eine Spitze an die Wellenoberfläche angedrückt ist. Dies vermindert die spezifische Reibung, so daß keine die Dichtlippe schädigenden Übertemperaturen mehr erzeugt werden können, was maßgeblich zur Lebensdauererhöhung beiträgt.

Das Weglassen der Feder bewirkt zum einen ebenfalls ein Vermindern des Anpreßdruckes und ermöglicht zum anderen eine Herstellung der Dichtlippe aus einem Stück, was die Zuverlässigkeit erhöht und die Herstellkosten senkt.

Praxiswerte der Anpressung liegen dabei in einem Bereich zwischen 0,1 und 0,4 N/cm.

Das Gewinde kann ein- oder mehrgängig und mit einer Gewindenut oder einer erhabenen Gewinderippe ausgeführt sein.

Ein Wellendichtring gemäß der Erfindung dichtet aufgrund der Absperrung des Gewindes zur Umgebung hin auch bei stillstehender Welle, also statisch. Diese Absperrung kann durch einen die Gewindenut absperrenden Steg oder durch Abflachen und Auslaufenlassen der Gewinden ut oder -rippe in die Oberfläche der Dichtlippe hinein zur Umgebungsseite hin erzielt werden.

Ein Wellendichtring nach der Erfindung ist für die Abdichtung von Kurbel- und Nockenwellen schnelllaufender Verbrennungsmotoren besonders geeignet.

Vorteilhafte Weiterbildungen, insbesondere vorteilhafte Dimensionierungsmaßnahmen, sind in den Unteransprüchen unter Schutz gestellt.

Die Erfindung Ist im folgenden anhand schematischer Zeichnungen an Ausführungsbeispielen mit weiteren Einzelheiten näher erläutert. Es zeigen:
- Fig. 1: einen Teilquerschnitt durch einen Wellendichtring gemäß der Erfindung;
- Fig. 2: eine vergrößerte Darstellung eines Dichtabschnittes des Wellendichtringes nach Fig. 1 bei weggelassener Welle;
- Fig. 3: in einer Darstellung wie Fig. 1 eine Abwandlung eines Wellendichtringes gemäß der Erfindung;
- Fig. 4: in einer Darstellung wie Fig. 1 eine weitere Abwandlung eines Wellendichtringes nach Fig. 3;
- Fig. 5: in einer im Maßstab vergrößerten Darstellung einen Wellendichtring gemäß Fig. 4 mit zusätzlicher Darstellung der Dichtlippe in noch nicht montiertem Zustand des Wellendichtringes, d.h. bei nicht vorhandener Welle.

Fig. 6a und 7a vergrößerte Teildarstellungen wie Fig. 2 von zwei unterschiedlich abgewandelten Wellendichtringen gemäß der Erfindung.

Fig. 6b und 7b in kleinerem Meßstab wiederum Teildarstellungen der abgewandelten Wellendichtringe gemäß Fig. 6a bzw. 6b.

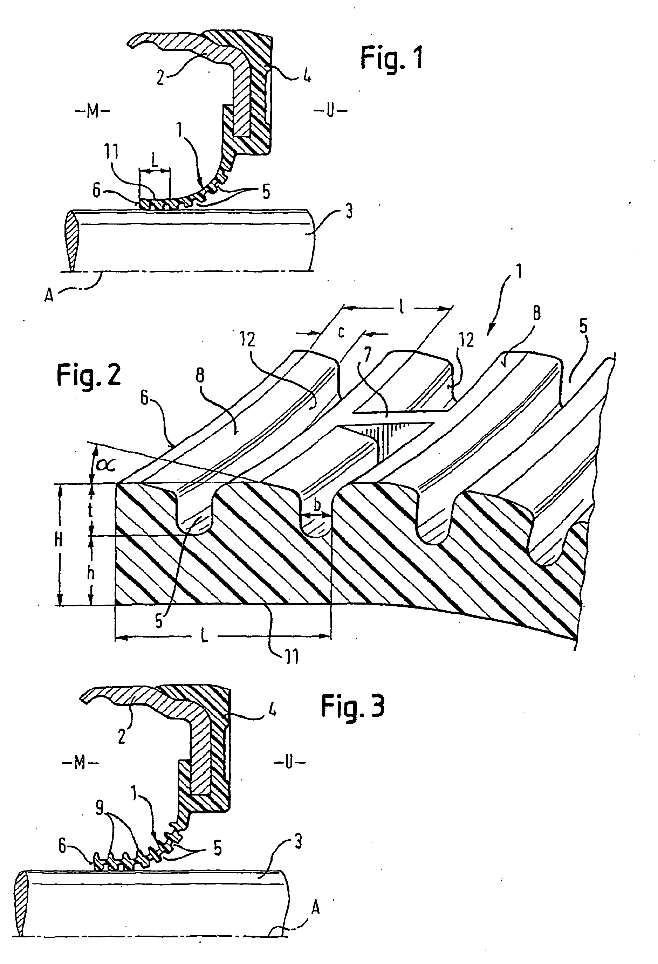

Ein in Fig. 1 gezeigter Wellendichtring weist eine Dichtmanschette 1 aus elastomerem Werkstoff auf, der direkt an ein Versteifungsblech 2 anvulkanisiert ist. Die Dichtlippe Ist aufgrund ihrer Dimensionierung biegeweich bzw. "biegeschlaff".

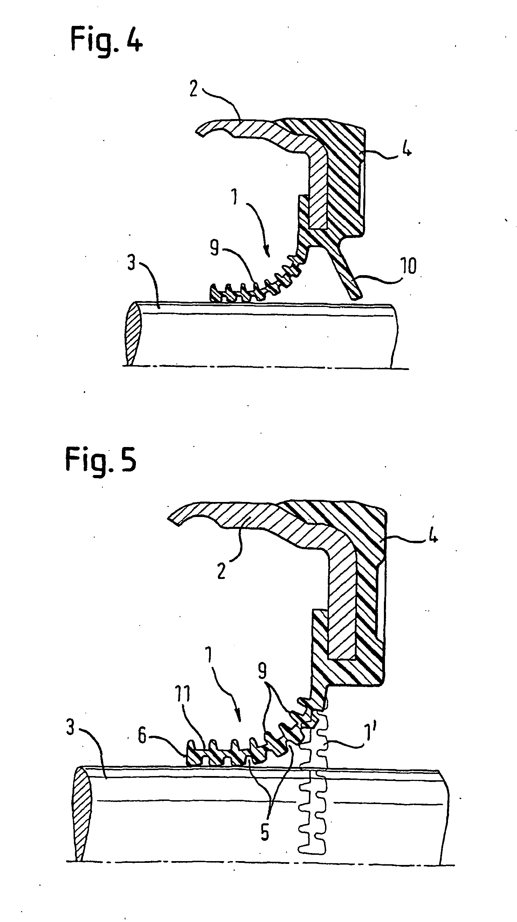

In nicht montiertem Zustand ist die Dichtlippe 1 radial gestreckt (s. Fig. 5) mit einem Innendurchmesser, der kleiner als der Außendurchmesser der abzudichtenden Welle 3 ist. In montiertem Zustand ist die Dichtlippe 1 in Richtung parallel zur Achse A der Welle 3 umgebogen derart, daß die Dichtlippe tangential an die Welle 3 anläuft und mit einem zylindrischen Teil 11 einer Länge L auf dem Umfang der Welle unter einer leichten, durch den Biegewiderstand der Dichtlippe 1 verursachten Anspressung flächig aufliegt. Die Dichtlippe wird so dimensioniert, daß die auf den Umfang der Welle 3 bezogene Anpressung in einen Bereich zwischen 0,1 und 0,4 N/cm zu liegen kommt.

Auf der der Umgebungsseite U zugewandten Seite der Dichtlippe 1 sind spiralige Rückförderkanäle in Form eines Gewindes 5 eingeschnitten. Statt eines Gewindes können auch andere Formen von Rückförderkanälen, z.B. schräg zur Achse verlaufende, zueinander parallel geschlossene Ringkanäle vorgesehen sein. Dabei ist wichtig, daß sich die Rückförderkanäle über die gesamte Länge L des Teils 11 erstrecken, so daß aus dem abzudichtenden Raum M entwichenes Medium von dem Gewinde 5 in diesen Raum M über das freie Ende 6 der Dichtlippe 1 zurückgefördert werden kann.

Der auf der Welle 3 aufliegende zylindrische Teil 11 des Dichtabschnittes mit der Länge L umgibt die Welle 3 koaxial zur Achse A. Dieser Teil 11 des Dichtabschnittes kann aufgrund der biegeweichen Gestaltung der Dichtlippe 1 jeder Wellenbewegung folgen, weil dank dieser Gestaltung nur sehr geringe Biegewiderstände der Dichtmanschette auftreten, so daß es nicht zum Entstehen eines Spaltes zwischen dem zylindrischen Teil 11 und der Oberfläche der Welle 3 kommen kann. Es sind verschiedene Maßnahmen zum Erreichen der gewünschten Biegeelastizität denkbar, wozu die Auswahl eines elastomeren Werkstoffes mit einem entsprechend geeigneten Elastizitätsverhalten gehört. Bevorzugte Dimensionierungsmaßnahmen, welche die Abmessungen der Dichtlippe 1 betreffen, seien nun anhand der Fig. 2 näher erläutert.

In dem in Fig. 2 dargestellten Ausschnitt der Dichtlippe, welche hier ebenso wie in Fig. 1 in umgebogenem, auf der (hier nicht gezeigten) Welle 3 montierten Zustand gezeichnet ist, bedeuten:
d - Wellendurchmesser
l - Ganghöhe des Gewindes
l' - Steigung des Gewindes 5 (l' = l/d)
t - Tiefe der Gewindenut
b - Breite der Gewindenut
c - Breite der Auslauffläche 8
H - Gesamtdicke der Dichtlippe 1;
h - wirksame Dicke der Dichtlippe 1 im Bereich des Gewindes 5.
α - Neigungswinkel der Auslauffläche c.

Aus Fig. 2 geht die Anordnung der durch den Winkel α und die Breite c gekennzeichneten Auslauffläche 8 längs der Flanke 12 des Gewindes 5 hervor, die zur Umgebungsseite U hinweist.

Das Gewinde 5 ist bei dieser Ausführung eingängig.

Ferner geht aus Fig. 2 die Lage eines Steges 7 hervor, welcher die Gewindenut im Auslaufbereich des Gewindes 5 zur Umgebungsseite U hin absperrt, um ein Auslaufen von Schmieröl bei stillstehender Welle 3 zur Umgebungsseite U zu verhindern.

Untersuchungen der Erfinder haben ergeben, daß folgende Verhältnisse und Abmessungsbereiche zu beachten sind, um das gewünschte Blegeverhalten der Dichtlippe 1 zu erhalten:
L/I ≥ 2,0; bevorzugt: 2,3 < L/I ≤ 3,2;
0,2 > c/l ≤ 0,5; bevorzugt: 0,28 < c/l ≤ 0,34;
0,3 < t/b ≤ 1,0; bevorzugt: 0,3 < t/b ≤ 0,7;
0,25 mm < h ≤ 1 mm; bevorzugt: 0,3 mm < h ≤ 0,5 mm.
3 < α ≤ 30°; bevorzugt: 10° < α ≤ 20°

Fig. 3 zeigt einen Wellendichtring, der sich von dem Wellendichtring nach den Fig. 1 und 2 allein dadurch unterscheidet, daß auf der dem abzudichtenden Raum M zugewandten Seite der Dichtlippe 1 gewindeförmig verlaufende Kühlrippen 9 angeformt sind. Die Kühlrippen 9 haben den Zweck, Reibungswärme besser aus dem Schmieröl abzuführen, das sich in den Rückförderkanälen des Gewindes 5 in intensivem Kontakt mit dem Werkstoff der Dichtlippe 1 befindet.

Die weitere Abwandlung gemäß Fig. 4 hat außer den anhand der Fig. 3 beschriebenen Kühlrippen 9 zusätzlich eine der Umgebungsseite U zugewandte Schutzlippe 10 zum Abweisen von Fremdteilchen, wie Staub, Schmutz oder Wassertröpfchen.

Fig. 5 zeigt einen Wellendichtring gemäß Fig. 3 mit der Dichtlippe 1 in eingebautem, auf der Welle montiertem Zustand und mit der dünn gezeichneten Dichtlippe 1' im Fertigungszustand bei weggenommener Welle 3. Die Größe der von der Dichtlippe 1 in eingebautem Zustand aufgebrachten radialen Anpreßkraft an die Welle 3 läßt sich über die Lage der Dichtlippe 1 in der (nicht gezeigten) Werkzeugform zwischen den Extremen (1) und (1') definiert einstellen.

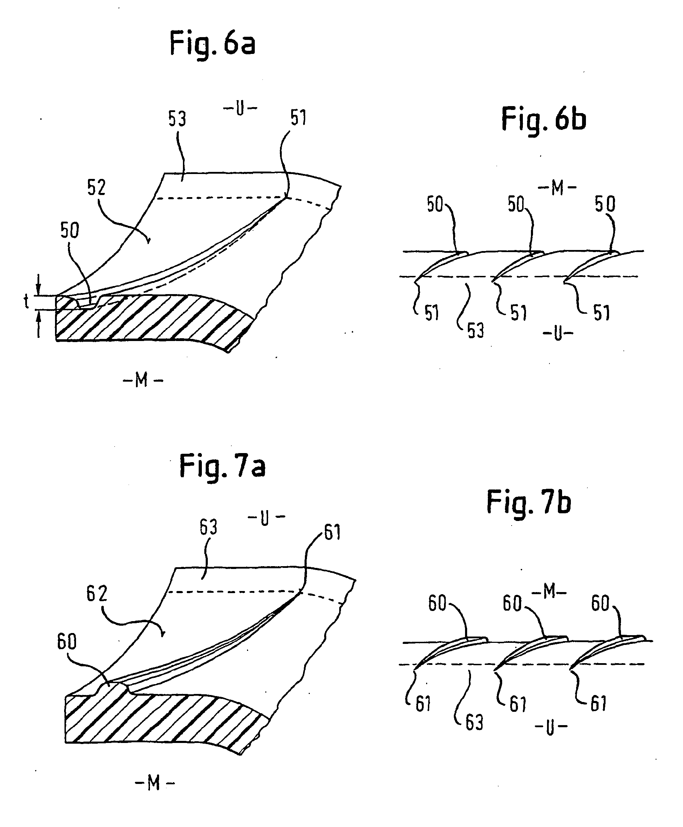

Bei dem abgewandeltem Wellendichtring nach den Figuren 6a und 6b, welche eine Darstellung ähnlich Figur 2 zeigt, ist ein mehrgängiges Gewinde mit Gewindenuten 50 vorgesehen, wobei die Konturierung im übrigen ähnlich wie bei der Ausführung nach Figur 2 ist. Unterschiedlich ist, daß die Gewindenuten 50 zur Umgebungsseite U ihre Tiefe t kontinuierlich verringern und schließlich am Punkt 51 in die Oberfläche (52) der Dichtlippe auslaufen. Jenseits der Punkte 51 legt sich die Dichtlippe mit ihrem Abschnitt 53 gleichmäßig abdichtend um den Umfang der Welle.

Bei dem abgewandeltem Wellendichtring gemäß den Figuren 7a und 7b ist ebenfalls ein mehrgängiges Gewinde vorgesehen, wobei anstatt Gewindenuten 50 Gewinderippen 60 vorgesehen sind. Diese Gewinderippen 60 werden ähnlich, wie bei dem Wellendichtring nach den Figuren 6a und 6b zur Umgebungsseite U hin immer flacher und laufen schließlich im Punkt 61 in die Oberfläche 62 der Dichtlippe aus. Da sich im Abschnitt 63 jenseits des Punktes 61 die Dichtlippe um den ganzen Umfang der Welle anlegt, ist das Gewinde auch hier gegen ein Lecken von Medium zur Umgebungsseite U abgesperrt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Wellendichtring für eine Welle (3) mit folgenden Merkmalen:
(a) der Wellendichtring hat eine Dichtlippe (1) aus einem Elastomerwerkstoff;
(b) die Dichtlippe (1) ist biegeweich mit einer Biegeelastizität dimensioniert, weiche zur abdichtenden Anpressung eines Dichtabschnittes (11) der Dichtlippe gerade ausreicht;
(c) der Dichtabschnitt der Dichtlippe (1) liegt über eine vorbestimmte Länge (L) auf;
(d) zumindest über die genannte Länge (L) ist die Dichtlippe (1) wellenseitig mit einem Gewinde (5) versehen, welches austretendes Medium zum abzudichtenden Raum (M) hin zurückfördert.
(e) der Wellendichtring enthält keine Feder;
(f) das Gewinde (5) ist zur Umgebung (U) hin abgesperrt;
**dadurch gekennzeichnet, daß**
(g) die abdichtende Anpressung der Dichtlippe (1) im Bereich zwischen 0,1 bis 0,4 N/cm liegt;
(h) das Verhältnis aus der aufliegenden Länge (L) des Dichtabschnitts zur Steigung (1) des Gewindes (5) mindestens 2,0 beträgt, insbesondere Im Bereich 2,3 bis 3,2 liegt; und
(i) das Gewinde (5) eine Gewindenut mit einem Verhältnis der Tiefe (t) zur Breite (b) im Bereich zwischen 0,3 und 0,7 aufweist.

2. Wellendichtring nach Anspruch 1, **dadurch gekennzeichnet, daß** das Gewinde (5) eingängig ist und eine Steigung (1) zwischen 0,6 und 0,8 aufweist.

3. Wellendichtring nach Anspruch 1 oder 2, **dadurch gekennzeichnet, daß** das Gewinde (5) längs einer der Umgebungsseite (U) zugewandten Flanke (12) eine konisch sich verjüngende Auslauffläche (8) aufweist.

4. Wellendichtring nach Anspruch 3, **dadurch gekennzeichnet, daß** das Verhältnis der Breite (c) der Auslauffläche (8) zur Steigung (1) des Gewindes im Bereich 0,2 bis 0,5 liegt, insbesondere zwischen 0,28 und 0,34.

5. Wellendichtring nach Anspruch 3 oder 4, **dadurch gekennzeichnet, daß** der Neigungswinkel (α) der Auslauffläche (8) im Bereich 3° bis 30° liegt, insbesondere zwischen 10° und 20°.

6. Wellendichtring nach einem der Ansprüche 1 bis 5, **dadurch gekennzeichnet, daß** die wirksame Dikke (h) der Dichtlippe (1) im Bereich des Gewindes (5), gemessen vom Grund der Gewindenut, im Bereich 0,25 bis 1 mm liegt, insbesondere zwischen 0,3 und 0,5 mm.

7. Wellendichtring nach einem der Ansprüche 1 bis 5, **dadurch gekennzeichnet, daß** das Gewinde (5) eine Gewinderippe (60) aufweist.

8. Wellendichtring nach einem der Ansprüche 1 bis 7, **dadurch gekennzeichnet, daß** das Gewinde (5) im Auslaufbereich zur Umgebung (U) hin durch einen Steg (7) abgesperrt ist.

9. Wellendichtring nach einem der Ansprüche 1 bis 7, **dadurch gekennzeichnet, daß** das Gewinde (5) zum Ende der Auflagefläche (52, 62) hin in die Dichtlippenoberfläche (53, 63) hinein ausläuft.

10. Wellendichtring nach einem der Ansprüche 1 bis 9, **dadurch gekennzeichnet, daß** das Gewinde (5) mehrgängig ist.

## Claims

1. A shaft sealing ring for a shaft (3) comprising the following features:
(a) the shaft sealing ring has a sealing lip (1) made of an elastomer material;
(b) the sealing lip (1) is flexible with an elasticity dimensioned just sufficient to press a sealing portion (11) of the sealing lip into sealing engagement;
(c) the sealing portion of the sealing lip (1) engages for a predetermined length (L);
(d) at least throughout the said length (L) the sealing lip (1) is provided with a thread (5) at the side facing the shaft to convey exiting medium back to the space (M) to be sealed;
(e) the shaft sealing ring does not include a spring;
(f) the thread (5) is blocked towards the surrounding (U);
**characterized in that**
(g) the sealing engagement pressure of the sealing lip (1) is in the range from 0.1 to 0.4 N/cm;
(h) the ratio between the engaging length (L) of the sealing portion and the pitch (1) of the thread (5) is at least 2.0, lying especially in the range from 2.3 to 3.2; and
(i) the thread (5) comprises a thread groove with a ratio between the depth (t) and the width (b) in the range from 0.3 to 0.7.

2. The shaft sealing ring as claimed in claim 1, **characterized in that** the thread (5) is a single thread and has a pitch (1) between 0.6 and 0.8.

3. The shaft sealing ring as claimed in claim 1 or 2, **characterized in that** the thread (5) comprises a conically tapering runout surface (8) along a flank (12) facing the surrounding side (U).

4. The shaft sealing ring as claimed in claim 3, **characterized in that** the ratio between the width (c) of the runout surface (8) and the pitch (1) of the thread is in the range from 0.2 to 0.5, especially between 0.28 and 0.34.

5. The shaft sealing ring as claimed in claim 3 or 4, **characterized in that** the angle of inclination (α) of the runout surface (8) is in the range from 3° to 30°, especially between 10° and 20°.

6. The shaft sealing ring as claimed in any one of claims 1 to 5, **characterized in that** the effective thickness (h) of the sealing lip (1) in the area of the thread (5), as measured from the bottom of the thread groove, is in the range from 0.25 to 1 mm, especially between 0.3 and 0.5 mm.

7. The shaft sealing ring as claimed in any one of claims 1 to 5, **characterized in that** the thread (5) comprises a thread rib (60).

8. The shaft sealing ring as claimed in any one of claims 1 to 7, **characterized in that** a web (7) blocks the thread (5) towards the surrounding (U) in the runout area.

9. The shaft sealing ring as claimed in any one of claims 1 to 7, **characterized in that** the thread (5) merges into the sealing lip surface (53, 63) towards the end of the engagement surface (52, 62).

10. The shaft sealing ring as claimed in any one of claims 1 to 9, **characterized in that** the thread (5) is a multiple thread.

## Revendications

1. Bague d'étanchéité pour un arbre (3), présentant les charactéristiques suivantes:
(a) la bague d'étanchéité comporte une lèvre d'étanchéité (1) en un matériau élastomère;
(b) la lèvre d'étanchéité (1) est dimensionnée de façon souplement flexible, avec une élasticité de flexion qui suffit précisément pour l'application étanche d'une partie d'étanchéité (11) de la lèvre d'étanchéité;
(c) la partie d'étanchéité de la lèvre d'étanchéité (1) s'applique sur une longueur prédéterminée (L);
(d) au moins sur la longueur (L) précitée, la lèvre d'étanchéité (1) est pourvue du côté de l'arbre d'un filet (5) qui renvoie le fluide sortant vers l'espace à rendre étanche (M);
(e) la bague d'étanchéité ne contient aucun ressort;
(f) le filet (5) est isolé par rapport à l'ambiance (U);
**caractérisée en ce que**
(g) l'application étanche de la lèvre d'étanchéité (1) est effectuée dans une gamme comprise entre 0,1 et 0,4 N/cm;
(h) le rapport de la longueur appliquée (L) de la partie d'étanchéité au pas (1) du filet (5) vaut au moins 2,0, et se situe en pariculier dans la gamme de 2,3 à 3,2; et
(i) le filet (5) présente une gorge de filet avec un rapport de la profondeur (t) à la largeur (b) située dans la gamme comprise entre 0,3 et 0,7.

2. Bague d'étanchéité selon la revendication 1, **caractérisée en ce que** le filet (5) est à une entrée et présente un pas (1) compris entre 0,6 et 0,8.

3. Bague d'étanchéité selon la revendication 1 ou 2, **caractérisée en ce que** le filet (5) présente, le long d'un flanc (12) orienté vers le côté de l'ambiance (U), une surface de sortie (8) se rétrécissant en forme de cône.

4. Bague d'étanchéité selon la revendication 3, **caractérisée en ce que** le rapport de la largeur (c) de la surface de sortie (8) au pas (1) du filet se situe dans la gamme comprise entre 0,2 et 0,5, en particulier entre 0,28 et 0,34.

5. Bague d'étanchéité selon la revendication 3 ou 4, **caractérisée en ce que** l'angle d'inclinaison (α) de la surface de sortie (8) se situe dans la gamme de 3° à 30°, en particulier entre 10° et 20°.

6. Bague d'étanchéité selon l'une quelconque des revendications 1 à 5, **caractérisée en ce que** l'épaisseur utile (h) de la lèvre d'étanchéité (1) dans la région du filet (5), mesurée à partir du fond de la gorge du filet, se situe dans la gamme de 0,25 à 1 mm, en particulier entre 0,3 et 0,5 mm.

7. Bague d'étanchéité selon l'une quelconque des revendications 1 à 5, **caractérisée en ce que** le filet (5) présente une nervure hélicoïdale (60).

8. Bague d'étanchéité selon l'une quelconque des revendications 1 à 7, **caractérisée en ce que** le filet (5) est isolé de l'ambiance (U) par une paroi (7) dans la région de sortie.

9. Bague d'étanchéité selon l'une quelconque des revendications 1 à 7, **caractérisée en ce que** le filet (5) se termine vers la fin de la surface de sortie (52, 62) dans la surface de la lèvre d'étanchéité (53, 63).

10. Bague d'étanchéité selon l'une quelconque des revendications 1 à 9, **caractérisée en ce que** le filet (5) est un filet à entrées multiples.
